# EUROPEAN PATENT SPECIFICATION

(11) **EP 3 014 586 B1**
(45) Date of publication and mention of the grant of the patent: **25.12.2019**
(21) Application number: 14747748.3
(22) Date of filing: 27.06.2014
(51) Int. Cl.: G07C 9/00

(54) **BATTERY POWERED REAR VIEW MIRROR DISPLAY AND INTEGRATED TRAINABLE TRANSCEIVER UNIT**
BATTERIEBETRIEBENE RÜCKBLICKSPIEGELANZEIGE UND INTEGRIERTE TRAINIERBARE SENDER-/EMPFÄNGEREINHEIT
AFFICHEUR DE RÉTROVISEUR INTÉRIEUR ALIMENTÉ PAR PILE ET MODULE ÉMETTEUR-RÉCEPTEUR ORIENTABLE INTÉGRÉ

(30) Priority: 28.06.2013 US 201313931504
(43) Date of publication of application: 04.05.2016
(73) Proprietor: Gentex Corporation, Zeeland MI 49464 (US)
(72) Inventor: GEERLINGS, Steven L., Holland, Michigan 49424 (US); TRAINOR, James E., Holland, Michigan 49424 (US); SHEARER, Carl L., Hudsonville, Michigan 49426 (US); WRIGHT, Thomas S., Holland, Michigan 49424 (US)
(74) Representative: Müller-Boré & Partner Patentanwälte PartG mbB
(86) International application number: PCT/US2014/044624
(87) International publication number: WO 2014/210491

(56) References cited:
- WO-A1-2008/154747
- WO-A1-2013/044077
- WO-A2-2008/082482
- GB-A- 2 325 552
- JP-A- 2004 309 238
- JP-A- 2012 059 396
- US-A- 4 447 808
- US-A1- 2008 129 495
- US-B1- 7 012 508

## Description

### CROSS-REFERENCE TO RELATED APPLICATIONS

This application claims the benefit U.S. Non-Provisional Application No. 13/931,504, filed on June 28, 2013.

### FIELD

The present disclosure relates generally to the field of vehicle electronics. The present disclosure relates more particularly to a trainable transceiver unit for mounting in a vehicle for facilitating communication between the vehicle and a remote electronic system. The present disclosure relates more particularly still to a battery-powered rear view mirror assembly for mounting in a vehicle, the mirror assembly having an integrated trainable transceiver unit for facilitating communication between the vehicle and a remote electronic system.

### BACKGROUND

Traditional systems for remotely controlling home appliances and home electronic devices (e.g., garage door openers, security gates, home alarms, lighting systems, etc.) often require separate remote controls for operating each appliance or electronic device. With such traditional systems, it can be difficult to control multiple electronic devices or to consolidate control of the multiple electronic devices into a single control system. For example, many garage door opener mechanisms open and close a garage door in response to a radio frequency control signal. The control signal is typically generated and transmitted from a remote control that is sold with the garage door opener. The control signal may have a preset carrier frequency and control code such that the garage door opener mechanism is responsive only to the remote control issuing the control signal. A problem associated with this type of system is that the door opener must receive a specific predetermined control signal to be operated. Other appliances and electronic devices may also require specific predetermined control signals, thereby increasing the difficulty of controlling multiple electronic devices with a single consolidated control system.

Some currently-available communications systems support controlling multiple appliances and/or electronic devices with a single remote control device. One such system is a HOMELINK® system, developed by Johnson Controls, Inc. A HOMELINK® system generally includes a trainable transceiver unit which is able to "learn" characteristics of multiple control signals. The trainable transceiver unit may subsequently generate and transmit a signal having the learned characteristics to a remotely controlled device. An example of such a system is disclosed in U.S. Patent No. 5,854,593.

A user can train the trainable transceiver by transmitting a signal from a remote controller in the vicinity of the trainable transceiver unit. The trainable transceiver learns the carrier frequency and data code of the signal and stores this information for later retransmission. In this manner, the trainable transceiver unit can be conveniently mounted within a vehicle interior element (e.g., visor, instrument panel, overhead console, etc.) and can be configured to operate one or more remote electronic systems.

Document GB 2 325 552 A relates to a trainable transmitter trained to learn the RF carrier frequency and code of a training signal transmitted from a separate transmitter where the code included in the training signal is a unique personal identification code associated with an individual. The RF signal transmitted from the trainable transmitter including the learned RF carrier frequency and personal identification code, is received by a receiver that analyzes the received personal identification code and responds thereto by performing a specific task relative to the individual identified in the personal identification code. The receiver to which the trainable transmitter transmits the learned RF signal may be a receiver installed in a security system in a parking location, along a toll road or bridge, or in a drive-through station of a service center, such as a restaurant or gas station. The trainable transmitter may be installed in a vehicle or provided in a key fob or identification card.

Document WO 2013/044077 A1 relates to a system for coupling to a vehicle and for causing actuation of a remote device via a control signal transmission. The system includes a transmitter for causing the control signal transmission to the remote device. The system further includes a circuit configured to cause a backup display to indicate status of the remote device in response to a status determination.

### SUMMARY

According to an aspect, the problem relates to providing an improved mirror assembly. This problem is solved by the mirror assembly having the features disclosed in claim 1. Preferred embodiments are defined in the dependent claims.

According to the invention, the housing is integrated with the mirror assembly of the vehicle. The transceiver circuit, the user interface element, and the battery are part of the mirror assembly. In some examples not being part of the invention as claimed, the housing may be integrated with at least one of: a visor of the vehicle, an instrument panel of the vehicle, and a headliner of the vehicle. The battery may be contained within one of the visor, the instrument panel, and the headliner.

In some embodiments, the battery may be used only to power the trainable transceiver unit. In some embodiments, the battery may be a long-life battery configured for performance at a range of temperatures at which the vehicle operates. In some embodiments, the battery may be a lithium battery contained within a mirror assembly of the vehicle. In some embodiments, the battery may include a hybrid layer capacitor and a lithium cell.

In some examples useful for understanding the invention, the battery is configured to supply a direct current and the trainable transceiver unit further includes a user-operable switch movable between an open position and a closed position. Moving the user-operable switch into the closed position may cause the transceiver circuit to transmit a control signal. The trainable transceiver unit may further include a capacitor arranged in series with the user-operable switch. The capacitor may be configured to prevent the direct current from draining the battery if the user-operable switch is maintained in the closed position.

In some embodiments, the trainable transceiver unit may further include an antenna coupled to the transceiver circuit. The antenna may be a dipole antenna configured to transmit a differential control signal to a remote electronic device.

In some embodiments, the trainable transceiver unit may further include an energy harvesting device. The energy harvesting device may be configured to charge the battery and/or a capacitor. The energy harvesting device may be a mechanical energy capture device, a piezoelectric energy capture device, a solar energy capture device, and/or an electromagnetic energy capture device.

In some embodiments, the trainable transceiver unit may further include a user input device. The transceiver circuit may be configured to transmit a control signal in response to an input received via the user input device.

. In some embodiments, the mirror assembly may be a rear view mirror assembly for the vehicle. In some embodiments, the mirror assembly may be configured to operate as a standalone unit without requiring any wired connections external to the mirror assembly housing.

In some embodiments, the mirror assembly may further include a partially-transmissive reflective surface covering an opening in the mirror assembly housing and an electronic display contained within the mirror assembly between the reflective surface and the mirror assembly housing. The electronic display may be configured to present visual information to a vehicle occupant through the partially-transmissive reflective surface. In some embodiments, the electronic display may be configured to present an indication of an amount of energy remaining in the battery through the partially-transmissive reflective surface.

In some embodiments, the mirror assembly may further include a user input device. The electronic display may be configured to present the indication of the amount of energy remaining in the battery in response to an input received via the user input device. In some embodiments, the amount of energy available in the battery may be displayed in response to the amount of energy remaining dropping below a threshold value. In some embodiments, the amount of energy available in the battery may be displayed in response to the voltage and/or current produced by the battery dropping below a threshold value or combination of threshold values.

In some examples useful for understanding the invention, the partially-transmissive reflective surface includes a layer of electrically-conductive material. A portion of the electrically-conductive material may be electrically isolated from a remainder of the electrically - conductive material. In some examples useful for understanding the invention, the electrically isolated portion of the electrically-conductive material is configured to function as at least one of: an antenna for extending a communications range of the transceiver circuit, and an energy harvesting device for recharging the battery.

Another example useful for understanding the invention is a mirror assembly for mounting in a vehicle. The mirror assembly includes a mirror assembly housing, a reflective surface, and a radio frequency identification (RFID) element integrated with the mirror assembly. In some examples useful for understanding the invention, the RFID element is located within the mirror assembly between the mirror assembly housing and the reflective surface. In some examples useful for understanding the invention, the RFID element is embedded in at least one of the mirror assembly housing and the reflective surface. In some embodiments, the mirror assembly is a rear view mirror assembly for the vehicle.

In some examples useful for understanding the invention, the reflective surface includes a layer of electrically-conductive material and a portion of the electrically -conductive material is electrically isolated from a remainder of the electrically-conductive material. In some examples useful for understanding the invention, the electrically isolated portion of the electrically-conductive material is configured to function as the RFID element.

In some examples useful for understanding the invention, the mirror assembly further includes a battery integrated with the mirror assembly and configured to supply power to the RFID element. In some examples useful for understanding the invention, the battery is located within the mirror assembly between the mirror assembly housing and the reflective surface.

### BRIEF DESCRIPTION OF THE DRAWINGS

FIG. 1 is a drawing of a vehicle equipped with a trainable transceiver unit configured to communicate with a remote electronic device, according to an exemplary embodiment.
FIG. 2 is a block diagram of the trainable transceiver unit and remote electronic device of FIG. 1, the trainable transceiver circuit shown to include user interface devices, a control circuit, a transceiver circuit, an antenna, a battery, and an energy harvest device, according to an exemplary embodiment.
FIG. 3 is an electrical schematic diagram of the trainable transceiver unit of FIG. 2, the trainable transceiver unit shown to include a switch interface circuit; power connections between the battery, the control circuit, and the switch interface circuit; and data connections between the switch interface circuit, the control circuit, and a RF circuit, according to an exemplary embodiment.
FIGS. 4-5 are circuit diagrams illustrating the switch interface circuit of FIG. 3 in greater detail, FIG. 4 showing the switch interface circuit without a capacitor and FIG. 5 showing the switch interface circuit with a capacitor for preventing DC current discharge in the event of a stuck button, according to an exemplary embodiment.
FIGS. 6-8 are drawings of a rear view mirror assembly from the perspective of a vehicle occupant, illustrating a partially-transmissive mirror surface and a display element positioned behind the mirror surface, the display element presenting an indication of remaining battery life through the partially-transmissive mirror surface from within the rear view mirror assembly, according to an exemplary embodiment.
FIGS. 9-10 are rear perspective drawings of the rear view mirror assembly of FIGS. 6-8, illustrating a battery, a printed circuit board, a switch interface circuit, and a plurality of wires extending therebetween, according to an exemplary embodiment.
FIGS. 11-13 are drawings of a damping ring for reducing magnetic resonance at a range of frequencies at which the trainable transceiver unit is configured to operate, according to an exemplary embodiment.
FIGS. 14-15 are drawings of a monopole antenna configuration and a dipole antenna configuration which may be used for the antenna of FIG. 2, according to an exemplary embodiment.
FIGS. 16-18 are drawings of various electrical connections between the printed circuit board of FIGS. 9-10 and the mirror surface of FIGS. 6-8, the electrical connections made either for using a conductive portion of the mirror surface as an extended antenna, or for electrically grounding the printed circuit board to the mirror surface for reducing magnetic resonance, according to an exemplary embodiment.
FIGS. 19A-E are a set of drawings illustrating an integrated antenna and mirror surface which may be formed by electrically isolating a conductive portion of the mirror surface, showing several potential antenna designs, according to an exemplary embodiment.
FIGS. 20-21 are circuit diagrams of a mechanical energy capture device and a solar energy capture device for recharging the battery of FIG. 2, according to an exemplary embodiment.
FIGS. 22-27 are drawings of the mirror assembly of FIGS. 6-8, illustrating status information presented via the partially-transmissive mirror surface from the display element within the mirror assembly, according to an exemplary embodiment.

### DETAILED DESCRIPTION

Referring generally to the FIGURES, a trainable transceiver unit for mounting in a vehicle is shown, according to several exemplary embodiments. The trainable transceiver unit may be configured to "learn" the characteristics of multiple remote control signals generated by multiple remote control devices (e.g., a remote control for a garage door, a security gate, a home lighting system, a home security system, etc.) and store an indication of the multiple remote control signals in a local memory thereof for subsequent retransmission. The trainable transceiver unit may reproduce a stored control signal upon receiving a user input (e.g., via a push button, a voice command, etc.) and transmit the stored control signal for operating a remote electronic system or device.

The trainable transceiver unit is integrated within a vehicle system component such as a rear view mirror. Advantageously, the trainable transceiver unit may be installed quickly and easily into an existing vehicle (e.g., as part of a vehicle upgrade or retrofit) without requiring extensive integration with the existing vehicle system. For example, the trainable transceiver unit may be a standalone device capable of independent and self-sufficient operation without relying on input from a vehicle subsystem or energy from the main vehicle battery. The trainable transceiver unit may include all the necessary processing electronics for learning, storing, and retransmitting a control signal. The trainable transceiver unit may further include a battery (e.g., separate from the main vehicle battery) used to power only the trainable transceiver unit.

In some embodiments, the trainable transceiver unit is integrated with a rear view mirror assembly for the vehicle. For example, the trainable transceiver unit may include a battery and a transceiver circuit mounted between a front reflective surface (e.g., the mirror) and a back housing of the rear view mirror assembly. The trainable transceiver unit may include one or more user input devices for controlling collection and retransmission of a remote control signal. In some embodiments, the trainable transceiver unit includes an electronic display for presenting information to a driver of the vehicle. For example, a LED or other low-powered electronic display may be positioned behind the reflective surface of the rear view mirror assembly and used to present information (e.g., remaining battery life, a status of the remote electronic system, etc.) to a vehicle occupant through the reflective surface.

Advantageously, the trainable transceiver unit may include an energy harvesting device such as a solar cell for collecting solar energy, a thermal absorption device for collecting heat energy, a radio frequency energy capture device for collecting energy from radio frequency signals (e.g., AM radio, WiFi, cell phone, etc.), and/or a mechanical energy capture device for collecting mechanical energy (e.g., piezoelectric, vibration, mechanically- driven electric current, etc.). The energy harvesting device may be used to charge or recharge the battery, thereby extending battery life and reducing or eliminating the need for battery replacement. The battery may be a long-life battery (e.g., a lithium battery, a lithium-thionyl chloride cell, etc.) configured to operate within a range of typical automotive temperatures.

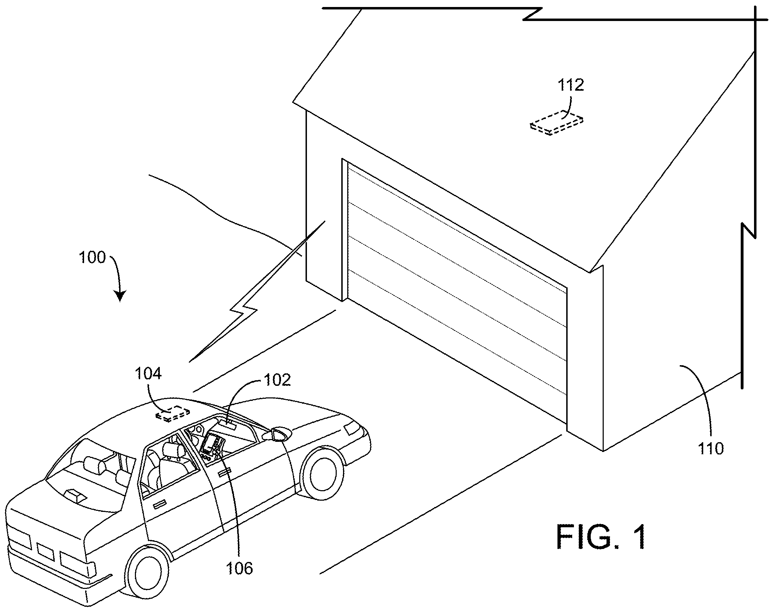

Referring now to FIG. 1, a perspective view of a vehicle 100 and garage 110 is shown, according to an exemplary embodiment. Vehicle 100 may be an automobile, truck, sport utility vehicle (SUV), mini-van, or other vehicle. Vehicle 100 is shown to include a trainable transceiver unit 102. The trainable transceiver unit 102 is integrated with a mirror assembly (e.g., a rear view mirror assembly) of vehicle 100.

Advantageously, trainable transceiver unit 102 may be configured for quick and easy installation into vehicle 100. For example, for embodiments in which trainable transceiver unit 102 is integrated with a rear view mirror assembly, installation may require only swapping an existing rear view mirror assembly for the integrated rear view mirror display and trainable transceiver unit assembly. Trainable transceiver unit 102 may include all the electronic components for self-sufficient operation (e.g., a control circuit, a transceiver circuit, a battery, etc.) without requiring a wired power or data connection to another vehicle system component.

Trainable transceiver unit 102 is configured to communicate with a remote electronic system 112 of a garage 110 or other structure. In some embodiments, remote electronic system 112 is configured to control operation of a garage door attached to garage 110. In other embodiments, remote electronic system 112 may be a home lighting system, a home security system, a data network (e.g., LAN, WAN, cellular, etc.), a HVAC system, or any other remote electronic system capable of receiving control signals from trainable transceiver unit 102.

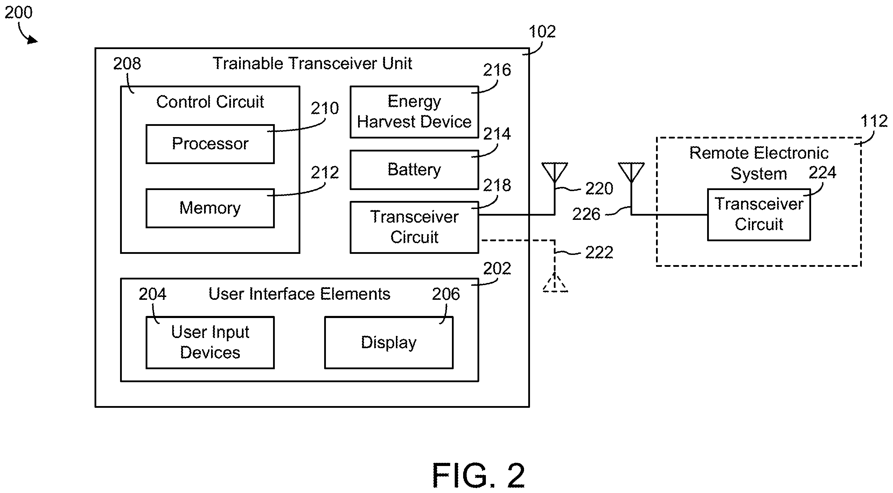

Referring now to FIG. 2, a block diagram of a system 200 including a trainable transceiver unit 102 and a remote electronic system 112 is shown, according to an exemplary embodiment. In brief overview, trainable transceiver unit 102 is shown to include user interface elements 202, a control circuit 208, a battery 214, an energy harvest device 216, and a transceiver circuit 218.

User interface elements 202 may facilitate communication between a user (e.g., driver, passenger, or other occupant of vehicle 100) and trainable transceiver unit 102. For example, user interface elements 202 may be used to receive input from a user and present information in a user-comprehensible form (e.g., visually, aurally, etc.). User interface elements 202 are shown to include user input devices 204 and display 206.

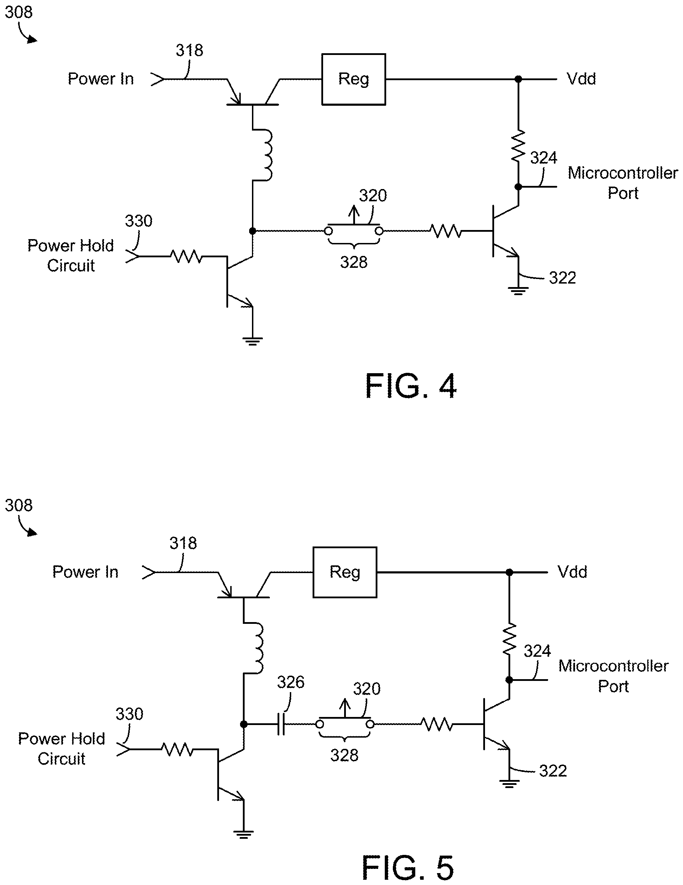

In some embodiments, user input devices 204 include one or more push buttons, switches, dials, knobs, touch-sensitive user input devices (e.g., piezoelectric sensors, capacitive touch sensors, etc.), or other devices for translating a tactile input into an electronic data signal. In other embodiments, user input devices 204 may include an optical sensor, a microphone, a voice-actuated input control circuit configured to receive voice signals from a vehicle occupant, or other user input interfaces configured to receive other forms of user input. Advantageously, user input devices 204 may be integrated with a rear view mirror assembly of vehicle 100. For example, user input devices 204 may include one or more pushbuttons (e.g., mounted along a bottom surface of a rear view mirror assembly), as shown and described in greater detail with reference to FIGS. 4-7. User input devices 204 provide input signals to control circuit 208 for controlling operation of trainable transceiver unit 102.

Display 206 may include one or more electronic display devices for presenting visual information to a driver or other occupant of vehicle 100. In some embodiments, display 206 is a low-power display device such as a light emitting diode (LED) or other display device configured to consume a relatively small amount of power during operation. In some embodiments, display 206 includes a plurality of LEDs (e.g., a red LED, a blue LED, a green LED, a LED strip or panel, etc.) configured to illuminate in combination to produce a variety of different colors and/or patterns. In other embodiments, display 206 may be a LCD panel, a backlit display, or other type of electronic display device. In some embodiments, display 206 is integrated with a rear view mirror assembly of vehicle 100. For example, display 206 may be located between a front reflective surface (e.g., the mirror) and a back housing of the mirror assembly. Display 206 may be configured to emit light through the front reflective surface of the rear view mirror assembly.

Display 206 may be configured to receive control signals from control circuit 208 and generate a display in response to the received control signals. Display 206 may be operated (e.g., by control circuit 208) to communicate various types of information to an occupant of vehicle 100. For example, display 206 may illuminate one or more LEDs to indicate that that a button has been pressed (e.g., via user input devices 204). In some embodiments, different LED colors or patterns may be used to indicate that different buttons or combinations of buttons have been pressed. For example, a green LED may be illuminated to indicate that a first button has been pressed whereas a red LED may be illuminated to indicate that a second button has been pressed. Display 206 may cause one or more LEDs to flash to indicate that an unassigned button has been pressed (e.g., a button not associated with a remote electronic system, an untrained button, etc.) or in response to an invalid user input.

In some embodiments, display 206 may be used to present information relating to an amount of energy remaining in battery 214. Various combinations of LED colors and/or illumination patterns (e.g., blinking, flashing, continuous illumination, etc.) may be used to indicate various energy amounts. For example, a green LED may be illuminated to indicate a relatively large amount of energy remaining in battery 214 whereas a red LED may be illuminated to indicate a relatively lesser amount of energy remaining in battery 214. Display 206 may be configured to present information relating to the amount of energy available in battery 214 in response to a particular user input (e.g., a particular combination of buttons pressed via user input devices 204) and/or in response to transmitting a control signal to a remote electronic system.

In some embodiments, the amount of energy available in battery 214 is displayed in response to the amount of energy remaining dropping below a threshold value. In some embodiments, the amount of energy available in battery 214 is displayed in response to the voltage and/or current produced by battery 214 dropping below a threshold value or combination of threshold values. Control circuit 208 may be configured to monitor the amount of energy remaining in battery 214, the voltage produced by battery 214, and/or the current produced by battery 214. Control circuit 208 may cause display 206 to present the amount of energy remaining in response to a determination (e.g., by control circuit 208) that the remaining energy, output voltage, and/or output current is/are below one or more threshold values.

In some embodiments, display 206 may be used for indicating a status of trainable transceiver unit 102 or for displaying other status information relating to vehicle 100 (e.g., miles per gallon, media player information, etc.). In some embodiments, display 206 may be used for displaying a status of remote electronic system 112 (e.g., whether a garage door is open, closed, closing, etc.) or other information received from remote electronic system 112.

Still referring to FIG. 2, trainable transceiver unit 102 is shown to include a control circuit 208. Control circuit 208 may be configured to receive input from user input devices 204 and provide control signals to display 206. Control circuit 208 may further be configured to operate transceiver circuit 218 for conducting electronic data communications with remote electronic system 112.

Control circuit 208 is shown to include a processor 210 and memory 212. Processor 210 may be implemented as a general purpose processor, a microprocessor, a microcontroller, an application specific integrated circuit (ASIC), one or more field programmable gate arrays (FPGAs), a CPU, a GPU, a group of processing components, or other suitable electronic processing components.

Memory 212 may include one or more devices (e.g., RAM, ROM, Flash® memory, hard disk storage, etc.) for storing data and/or computer code for completing and/or facilitating the various processes, layers, and modules described in the present disclosure. Memory 212 may comprise volatile memory or non-volatile memory. Memory 212 may include database components, object code components, script components, or any other type of information structure for supporting the various activities and information structures described in the present disclosure. In some implementations, memory 212 is communicably connected to processor 210 via control circuit 208 and includes computer code (e.g., data modules stored in memory 212) for executing one or more control processes described herein.

Still referring to FIG. 2, trainable transceiver unit 102 is shown to include a battery 214. Battery 214 may be configured to supply power to the various electronic components of trainable transceiver unit 102. Battery 214 is separate from the main vehicle battery used to power other systems and subsystems of vehicle 100 (e.g., a stereo system, a navigation system, a lighting system, etc.). In some embodiments, battery 214 is used to power only trainable transceiver unit 102. Trainable transceiver unit 102 may receive power from only battery 214 without relying on other supplemental or alternative power sources. Advantageously, battery 214 may facilitate operation of trainable transceiver unit 102 independent from the main vehicle battery and vehicle power line, thereby insulating trainable transceiver unit 102 from undesirable vehicle power line noise.

In some embodiments, battery 214 may be installed within a rear view mirror assembly of vehicle 100 (e.g., between the mirror and back housing). For implementations in which trainable transceiver unit 102 is integrated with a rear view mirror display, the integrated product may be sold and installed as a standalone unit. Advantageously, locating battery 214 within the rear view mirror assembly allows trainable transceiver unit 102 to operate independently without requiring wiring connections to any other component of vehicle 100. This advantage facilitates installation of trainable transceiver unit 102 by eliminating the need to disassemble vehicle 100 to run power cables from a main vehicle power line to trainable transceiver unit 102. Any necessary power cables or other wiring connections may be contained entirely within the rear view mirror assembly. Battery 214 may be configured to be quickly and easily replaced without requiring substantial disassembly or rewiring.

Battery 214 may be a long-life battery configured to reliably provide power over an extended period of time (e.g., 1 year, 2 years, 5 years, 10 years, etc.). In some embodiments, battery 214 is a lithium cell battery or other battery having a high power density. For example, battery 214 may include a lithium-thionyl chloride energy cell. The lithium-thionyl chloride energy cell may contain a liquid mixture of thionyl chloride (i.e., SOCl₂) and lithium tetrachloroaluminate (i.e., LiAlCl₄). The thionyl chloride may act as a cathode for the energy cell and the lithium tetrachloroaluminate may act as an electrolyte for the energy cell. Lithium-thionyl chloride batteries may be well suited for extremely low-current applications where long battery life is necessary or desirable. In some embodiments, battery 214 includes a porous carbon material. The porous carbon material may function as a cathode current collector (e.g., for receiving electrons from an external circuit).

Battery 214 may be configured to have a low self-discharge rate. Advantageously, a high energy or power density in combination with a low self-discharge rate may contribute to battery 214 reliably providing power for an extended period of time. The high energy or power density in combination with the low self-discharge rate may also qualify battery 214 as a long-life battery.

Battery 214 may store energy chemically and/or electrically. For example, in some embodiments, battery 214 includes a capacitive element configured to store electrical energy. In some embodiments, battery 214 includes a "hybrid layer capacitor" used with a lithium cell. The hybrid layer capacitor may be the same as or similar to the hybrid layer capacitors sold by Tadiran Batteries. For example, a hybrid layer capacitor may be a type of rechargeable battery. A hybrid layer capacitor may include electrodes comprising lithium intercalation compounds. A hybrid layer capacitor generally has a low impedance and can deliver high current pulses. One or more hybrid layer capacitors may be connected in parallel with the lithium cell.

In some embodiments, the performance and reliability properties (e.g., output voltage, output current, energy capacity, power density, self-discharge rage, etc.) of the hybrid layer capacitor may be configured to match the performance and reliability properties of the lithium cell. For example, the hybrid layer capacitor may be charged to a voltage of approximately 3.6 V. In some embodiments, the hybrid layer capacitor may be charged to a voltage of approximately 3.9 V or any other voltage associated with the lithium cell (e.g., a voltage produced by the lithium cell, a voltage produced by a series combination of lithium cells, etc.). Advantageously, the use of one or more hybrid layer capacitors (e.g., with or without a lithium cell) may contribute to the high energy density and/or high power density of battery 214 and may facilitate standalone use of battery 214 for an extended period of time (e.g., five years, ten years, up to twenty-five years, etc.).

Battery 214 may be configured to reliably and safely provide power over an extended range of temperatures at which vehicle 100 operates. For example, battery 214 may be subjected to relatively high temperatures (e.g., above 100 °F, above 150 °F, etc.) if vehicle 100 is parked in a sunny location on a hot summer day. Temperatures within vehicle 100 may range from extremely low temperatures (e.g., at or below -20 °F during winter months) to extremely high temperatures (e.g., at or above 100 °F during summer months). Battery 214 may be configured to retain and provide the energy required to power trainable transceiver unit 102 for an extended period of time throughout an extended temperature range. In some embodiments, battery 214 includes a glass-metal seal for facilitating the extended use of battery 214 in an automotive implementation.

Still referring to FIG. 2, trainable transceiver unit 102 is shown to include an energy harvest device 216. In some embodiments, energy harvest device 216 may be used to charge or recharge battery 214. Energy harvest device 216 may include any type of energy collection device capable of capturing and providing energy to battery 214. For example, energy harvest device 216 may be a solar cell for collecting solar energy, a thermal absorption device for collecting heat energy, a radio frequency energy capture device for collecting energy from radio frequency signals (e.g., AM radio, WiFi, cell phone, etc.), and/or a mechanical energy capture device for collecting mechanical energy (e.g., piezoelectric, vibration, mechanically-driven electric current, etc.). Energy harvesting device 216 may be used to trickle charge battery 214, thereby extending battery life and reducing or eliminating the need for battery replacement.

In some embodiments, energy harvest device 216 includes a user-operable dial or spring plunger attached to the rear view mirror assembly. The dial or spring plunger may be attached to a magnetic element (e.g., a rotating magnet, a magnet moveable within a solenoid, etc.) for generating an electric current. A user may manually operate energy harvest device 216 by turning the dial or pushing the spring plunger, thereby moving the magnetic element and causing electric current to be provided to battery 214.

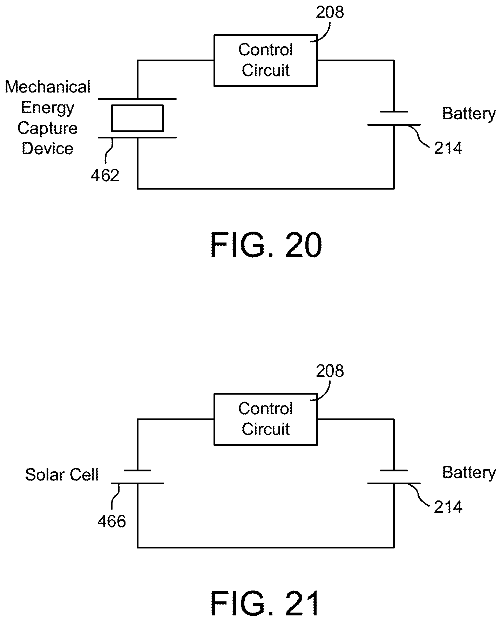

In some embodiments, energy harvest device 216 includes a piezoelectric element configured to induce a voltage when vibrated. For example, one end of the piezoelectric element may be attached to a stem of the rear view mirror assembly (e.g., extending from the mirror housing to the front wind shield of vehicle 100). The other end of the piezoelectric element may be attached to an internal structure of the rear view mirror assembly. As the rear view mirror assembly vibrates relative to the stem (e.g., due to the movement of vehicle 100), the piezoelectric element may induce a voltage for recharging battery 214. Several examples of energy harvest devices 216 are shown and described in greater detail with reference to FIGS. 20-21.

Still referring to FIG. 2, trainable transceiver unit 102 is shown to include a transceiver circuit 218 and an antenna 220. Transceiver circuit 218 may include transmit and/or receive circuitry configured to communicate via antenna 220 with remote electronic system 112. Transceiver circuit 218 may be configured to transmit wireless control signals having control data for controlling remote electronic system 112. Transceiver circuit 208 may be further configured to receive wireless status signals including status information from remote electronic system 112. Trainable transceiver unit 102 and remote electronic system 112 may communicate using any suitable wireless standard, (e.g., Bluetooth, WiFi, WiMax, etc.) or other communications protocols compatible with or proprietary to remote electronic system 112. Trainable transceiver unit 102 may be configured to learn and replicate control signals using any wireless communications protocol.

In a training mode of operation, transceiver circuit 218 may be configured to receive one or more characteristics of an activation signal sent from an original transmitter for use with remote electronic system 112. An original transmitter may be a remote or hand-held transmitter, which may be sold with remote electronic system 112 or as an after-market item. The original transmitter may be configured to transmit an activation signal at a predetermined carrier frequency and having control data configured to actuate remote electronic system 112. For example, the original transmitter may be a hand-held garage door opener transmitter configured to transmit a garage door opener signal at a frequency (e.g., centered around 315MHz or 355 MHz, etc.). The activation signal may include control data, which can be a fixed code, a rolling code, or another cryptographically-encoded code. Remote electronic system 112 may be configured to open a garage door, for example, in response to receiving the activation signal from the original transmitter.

Transceiver circuit 218 may be configured to identify and store one or more characteristics of the activation signal (e.g., signal frequency, control data, modulation scheme, etc.) from the original transmitter or from another source. In some embodiments, transceiver circuit 218 is configured to learn at least one characteristic of the activation signal by receiving the activation signal, determining the frequency of the activation signal, and/or demodulating the control data from the activation signal. Alternatively, trainable transceiver unit 102 can receive one or more characteristics of the activation signal by other methods of learning. For example, the one or more characteristics of the activation signal can be preprogrammed into memory 212 during manufacture of trainable transceiver unit 102, input via user input devices 204, or learned via a "guess and test" method. In this manner, trainable transceiver unit 102 need not actually receive the activation signal from an original transmitter in order to identify characteristics of the activation signal. Trainable transceiver unit 102 may store the characteristics of the activation signal in memory 212.

In some embodiments, transceiver circuit 218 is configured to integrate the original transmitter as part of the wireless control system. For example, operation of the original transmitter within range of trainable transceiver unit 102 may provide an activation signal to transceiver circuit 218, indicating that the signal was also sent to remote electronic system 112. In some embodiments, transceiver circuit 218 eliminates the need for continued use of the original transmitter after training is complete.

Transceiver circuit 218 may be configured to generate a carrier frequency at any of a number of frequencies (e.g., in response to a control signal from control circuit 208). In some embodiments, the frequencies generated can be in the ultra-high frequency range (e.g., between 20 and 470 megahertz (MHz), between about 20 and 950 MHz, between about 280 and 434 MHz, up to 868 MHz, up to 920 MHz, up to 960 MHz, etc.) or in other frequency ranges. The control data modulated with the carrier frequency signal may be frequency shift key (FSK) modulated, amplitude shift key (ASK) modulated, or modulated using another modulation technique. Transceiver circuit 218 may be configured to generate a wireless control signal having a fixed code, a rolling code, or other cryptographically encoded control code suitable for use with remote electronic system 112.

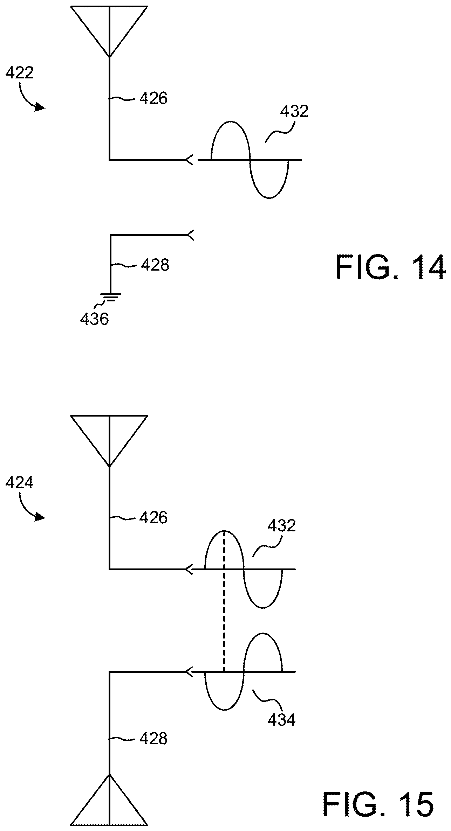

Transceiver circuit 218 may use antenna 220 to increase a range or signal quality of the communications between trainable transceiver unit 102 and remote electronic system 112. In some embodiments, antenna 220 is a monopole antenna including a single antenna branch. In other embodiments, a second antenna branch 222 may be used. Antenna branch 222 and antenna 220 may be arranged in a dipole configuration (e.g., extending in opposite directions from an antenna stem, as a dipole loop, etc.). Advantageously, the dipole configuration may improve system performance by preventing resonance at an undesirable frequency. The dipole antenna configuration is discussed in greater detail with reference to FIG. 15.

Still referring to FIG. 2, system 200 is shown to include a remote electronic system 112. Remote electronic system 112 may be any of a plurality of remote electronic systems, such as a garage door opener (as shown in FIG. 1), security gate control system, security lights, remote lighting fixtures or appliances, a home security system, or another set of remote devices. Remote electronic system 112 is shown to include a transceiver circuit 224 and an antenna 226. Transceiver circuit 224 includes transmit and/or receive circuitry configured to communicate via antenna 226 with trainable transceiver unit 102. Transceiver circuit 224 may be configured to receive wireless control signals from trainable transceiver unit 102. The wireless control signals may include control data for controlling operation of remote electronic system 112.

In some embodiments, transceiver circuit 224 is configured to transmit wireless status signals having status data indicating the current status of remote electronic system 112 and/or the device remote electronic system 112 controls. The status data may include a "SUCCESS" status indicative that the control signal sent by trainable transceiver unit 102 was properly received and the control function was successfully executed by remote electronic system 112. The wireless status signal may be sent upon completion of the function specified in the wireless control signal. The status data may also include an "ACKNOWLEDGE" status indicative that a proper wireless control signal was received by transceiver circuit 224.

In some embodiments, transceiver circuit 224 is configured to send a plurality of "IN PROCESS" status signals until completion of the operation, whereupon a "SUCCESS" or "FAILURE" status signal may be sent. For example, for embodiments in which remote electronic system is a garage door control system, status signals sent from transceiver circuit 224 may include an indication of whether the garage door is open, closed, or moving between an open and closed position.

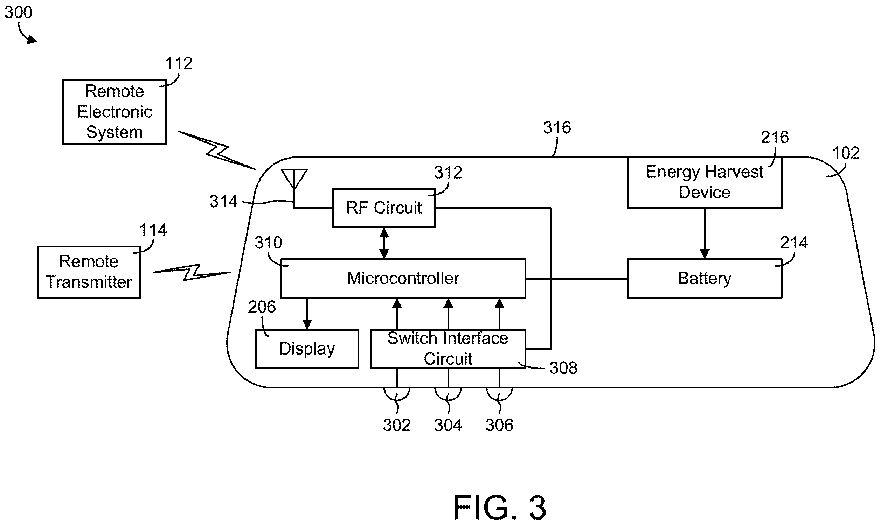

Referring now to FIG. 3, an electrical schematic diagram 300 of trainable transceiver unit 102 is shown, according to an exemplary embodiment. Schematic diagram 300 illustrates the data and power connections within trainable transceiver unit 102 as well the electronic data communications between trainable transceiver unit 102, remote electronic system 112, and remote transmitter 114.

Schematic diagram 300 is shown to include several of the components of trainable transceiver unit 102 previously described with reference to FIG. 2. For example, schematic diagram 300 is shown to include display 206, battery 214, and energy harvest device 216. Schematic diagram 300 is shown to further include several additional components including buttons 302, 304, and 306, a switch interface circuit 308, a microcontroller 310, and a RF circuit 312 with an attached antenna 314.

Notably, schematic diagram 300 illustrates the various components of trainable transceiver unit 102 within a housing 316. Housing 316 may be a perimeter frame, rear housing, or other boundary associated with a rear view mirror assembly. Advantageously, all components of trainable transceiver unit 102 may be located within or mounted upon housing 316.

Still referring to FIG. 3, schematic diagram 300 is shown to include buttons 302, 304, and 306. Buttons 302-306 may be an embodiment of user input devices 204, as previously described with reference to FIG. 2. For example, buttons 302-306 may be user-operable input devices for controlling operation of trainable transceiver unit 102. Each of buttons 302-306 may be associated with (e.g., trained, programmed, configured to operate, etc.) a different remote device controllable by trainable transceiver unit 102. For example, button 302 may be associated with a garage door system, button 304 may be associated with an access gate system, and button 306 may be associated with a home lighting system. Buttons 302-306 may include any number of buttons and may be configured to operate any number of remote electronic systems 112.

In some embodiments, each remote electronic system 112 controlled by trainable transceiver unit 102 requires a control signal having different signal characteristics (e.g., operating frequency, modulation scheme, security code, etc.). Each of buttons 302-306 may cause trainable transceiver unit 102 to emit a control signal having different signal characteristics (e.g., for controlling multiple remote electronic systems with a single trainable transceiver unit). In some embodiments, buttons 302-306 may be pushbutton switches which complete an electrical path within switch interface circuit 308 when pushed.

Switch interface circuit 308 may be a circuit element configured to translate a user input received via buttons 302-306 into an electrical signal for transmission to microcontroller 310. Switch interface circuit 308 may receive an electric current and/or voltage from battery 214 and selectively deliver the received current and/or voltage to a particular port of microcontroller 310. In some embodiments, switch interface circuit delivers the electric current and/or voltage to a microcontroller port in response to a user selection of buttons 302-306. The particular port of microcontroller 310 to which switch interface circuit 308 routes current and/or voltage may depend on which of buttons 302-306 is pressed. Thus, microcontroller 310 may receive a different input from switch interface circuit 308 (e.g., an input received at a different microcontroller port) based on which of buttons 302-306 is pressed. In some embodiments, switch interface circuit 308 includes a capacitive element configured to prevent battery 214 from discharging in the event that one of buttons 302-306 is maintained in a pressed condition (e.g., held by a user, stuck in a pressed position, etc.). The specific configuration of switch interface circuit 308 is described in greater detail with reference to FIGS. 4-5.

Still referring to FIG. 3, schematic diagram 300 is shown to include a microcontroller 310 and a RF circuit 312. Microcontroller 310 and RF circuit 312 may be embodiments of control circuit 208 and transceiver circuit 218 as previously described with reference to FIG. 2. Microcontroller 310 may be configured to receive an input from switch interface circuit 308 and to operate display 206 and/or RF circuit 312 in response to the input. For example, microcontroller 310 may be configured to monitor or measure an amount of energy remaining in battery 214 (e.g., via a measured voltage, current, etc.) and cause display 206 to present an indication of the amount of energy remaining.

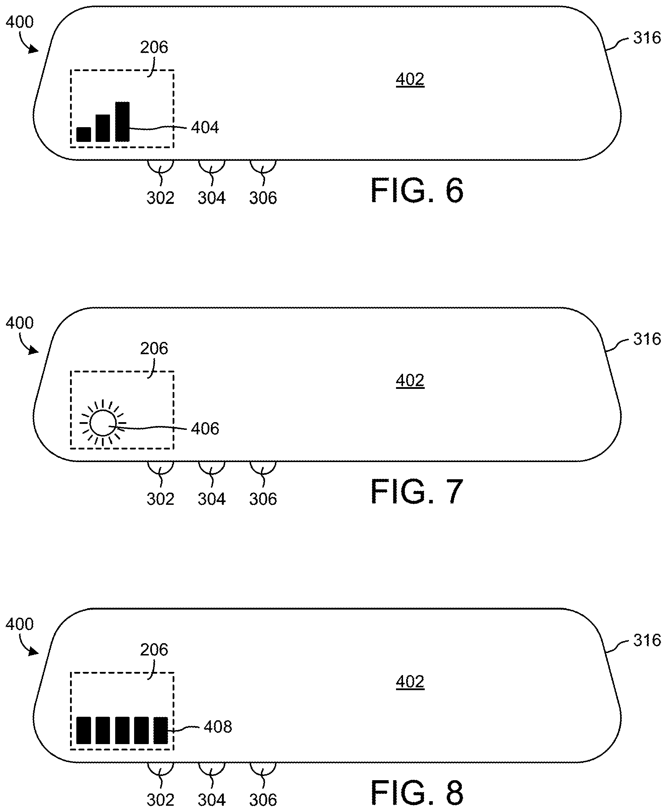

In some embodiments, the amount of energy available in battery 214 is displayed in response to the amount of energy remaining dropping below a threshold value. In some embodiments, the amount of energy available in battery 214 is displayed in response to the voltage and/or current produced by battery 214 dropping below a threshold value or combination of threshold values. Several exemplary embodiments of various battery life indications which may be presented via display 206 are shown and described in greater detail with reference to FIGS. 6-8. In some embodiments, microcontroller 310 may illuminate a LED of display 206 each time a control signal is transmitted from RF circuit 312.

RF circuit 312 may be configured to receive a control signal from remote transmitter 114 (e.g., during a training mode of operation), to identify one or more characteristics of the control signal (e.g., frequency, control data, modulation scheme, etc.), and to store the control signal characteristics in a local memory of trainable transceiver unit 102. RF circuit 312 may receive and store any number of control signal characteristics corresponding to any number of remote transmitters 114.

RF circuit 312 may be configured to reproduce the control signal in response to an input received from microcontroller 310. For example, in response to a first input received from microcontroller 310 (e.g., caused by a user pressing button 302), RF circuit 312 may reproduce and transmit a first control signal via antenna 314. In response to a second input received from microcontroller 310 (e.g., caused by a user pressing button 304), RF circuit 312 may reproduce and transmit a second control signal via antenna 314. In response to a third input received from microcontroller 310 (e.g., caused by a user pressing button 306), RF circuit 312 may reproduce and transmit a third control signal via antenna 314. Advantageously, RF circuit 312 may be capable of reproducing any number of control signals for operating any number of remote electronic systems 112.

Referring now to FIG. 4, a detailed drawing of switch interface circuit 308 is shown, according to a first exemplary embodiment. Switch interface circuit 308 may receive power (e.g., from battery 214) via power line 318. Switch interface circuit 308 is shown to include a switch 320. Switch 320 may be mechanically coupled to one of buttons 302, 304, or 306 and may be movable between an open position and a closed position. When a user presses one of buttons 302, 304, or 306, switch 320 may be moved into the closed position, thereby bridging gap 328 and allowing current to flow from power line 318 to microcontroller port 324. For embodiments in which power line 318 is supplied by battery 214, the current may be a direct current (e.g., a "DC current). When microcontroller port 324 is energized, microcontroller 310 may power up and secure its own power supply from power hold circuit 330. When switch 320 is in the closed position, electric current may also flow to ground 322.

Under ordinary circumstances, when a user releases the pressed button (e.g., one of buttons 302, 304, or 306), switch 320 returns to the open position, thereby breaking the connection across gap 328. When switch 320 is in the open position, electric current may be prevented from flowing to ground 322 and microcontroller port 324. In the event that one of buttons 302, 304, or 306 becomes stuck, switch 320 may fail to return to the open position when released. When switch 320 is stuck in the closed position, DC current may be permitted to continuously flow to ground 322. This continuous current flow may cause battery 214 to be depleted prematurely.

Referring now to FIG. 5, switch interface circuit 308 is shown, according to a second exemplary embodiment. In FIG. 5, switch interface circuit 308 is shown to include a capacitor 326 positioned in series with switch 320. When switch 320 is in the open position, capacitor 326 may be charged by power line 318. Upon moving switch 320 into the closed position, the charge in capacitor 326 may be released, thereby energizing microcontroller port 324. For embodiments in which power line 318 receives power from a DC source, capacitor 326 may conduct current only for a short period of time once switch 320 is closed. Advantageously, the use of capacitor 326 in series with switch 320 may prevent DC current from flowing continuously to ground 322 in the event that switch 320 becomes stuck in the closed position.

The amount of time during which capacitor 326 conducts current and the amount of current conducted by capacitor 326 may depend on the capacitance, time constant or other attributes of capacitor 326 and/or switch interface circuit 308. In some embodiments, capacitor 326 and/or switch interface circuit 308 may be configured to deliver sufficient current to microcontroller port 324 to allow microcontroller 310 to power up and secure its own power supply from power hold circuit 330. In the event that switch 320 becomes stuck in the closed position, capacitor 236 may act as a break in the circuit when a DC current is supplied by power line 318. Thus, electric current may be delivered to microcontroller port and ground 322 for only a short time period regardless of whether switch 320 remains stuck in the closed position, thereby preventing battery 214 from depleting prematurely.

Referring now to FIGS. 6-8, several drawings of a rear view mirror assembly 400 are shown, according to an exemplary embodiment. FIGS. 6-8 illustrate the appearance of rear view mirror assembly 400 from the perspective of a driver or other occupant within vehicle 100. Rear view mirror assembly 400 is shown to include housing 316 and a plurality of buttons 302, 304, and 306 extending from a lower surface of housing 316. Housing 316 and buttons 302-306 may be the same or substantially the same as previously described with reference to FIG. 3.

It is understood that the number of inputs and location of buttons 302-306 is not limited to the depicted embodiment, but may include any number of buttons or other inputs in any location, as readily understood by the skilled artisan. For example, more or less inputs may be provided based on the number of remote electronic systems with which trainable transceiver unit 102 is configured to communicate. Buttons 302-306 may located anywhere on mirror assembly 400. In some embodiments, housing 316 is a shell having one open face.

Rear view mirror assembly 400 is shown to further include a reflective surface 402. Reflective surface 402 may be mounted over the open face of housing 316, thereby covering the open face and closing mirror assembly 400. Reflective surface 402 may be a one-way mirror (e.g., a partially transmissive, partially reflective, transflective, etc.) or other similar surface such that objects behind reflective surface 402 (e.g., objects within mirror assembly 400) may be viewed, while at least partially maintaining the reflectivity of surface 402 to external light (e.g., light not originating from within mirror assembly 400). Reflective surface 402 may be an electrochromatic or any other type of reflective element. In some embodiments, rear view mirror assembly 400 includes a retaining bezel around reflective surface 402. In other embodiments, mirror assembly 400 appears without a significant retaining bezel.

Still referring to FIGS. 6-8, mirror assembly 400 is shown to include display 206. Display 206 may be the same or similar as previously described with reference to FIG. 2. Display 206 may be positioned behind reflective surface 402 (e.g., within mirror assembly 400). Display 206 may be visible through reflective surface 402 due to the partially transmissive properties of surface 402 and may be used to display icons, text, or other images on or through reflective surface 402. In some embodiments, display 206 is used to display an indication of an amount of energy remaining in battery 214 (e.g., a remaining battery life).

Referring specifically to FIG. 6, display 206 is shown displaying a first battery life indicator 404, according to an exemplary embodiment. Battery life indicator 404 is shown as a plurality of vertical bars, arranged from shortest to longest from left to right. Battery life indicator 404 may display a maximum number of bars when battery 214 is completely charged. As battery 214 is depleted, battery life indicator 404 may display progressively fewer bars. In some embodiments, bars may be subtracted from the right side of battery life indicator 404 (e.g., longest bars subtracted first) as battery 214 is depleted.

Referring specifically to FIG. 7, display 206 is shown displaying a second battery life indicator 406, according to an exemplary embodiment. Battery life indicator 406 is shown as an illuminated LED, shining through reflective surface 402. In some embodiments, battery life indicator 406 may have a first color (e.g., green) when battery 214 is completely charged. As battery 214 is depleted, battery life indicator 406 may change color (e.g., from green, to yellow, to red). In some embodiments, battery life indicator 406 may begin flashing or alter a flashing pattern as battery 214 is depleted. In some embodiments, battery life indicator 406 may both change color and a vary a flashing pattern as battery 214 is depleted.

Referring specifically to FIG. 8, display 206 is shown displaying a third battery life indicator 408, according to an exemplary embodiment. Battery life indicator 408 is shown as an plurality of vertical bars arranged side by side (e.g., from left to right). Battery life indicator 408 may display a maximum number of bars when battery 214 is completely charged. As battery 214 is depleted, battery life indicator 408 may display progressively fewer bars. In some embodiments, bars may be subtracted from the right side of battery life indicator 408 as battery 214 is depleted.

In some embodiments, battery life indicator 408 may have a first color (e.g., green) when battery 214 is completely charged. As battery 214 is depleted, battery life indicator 408 may change color (e.g., from green, to yellow, to red) in addition to or in place of subtracting bars. For example, when battery 214 is fully charged, a maximum number of bars (e.g., five bars) may be displayed. All of the bars may have a first color (e.g., green) when battery 214 is fully charged. As battery 214 is depleted, battery life indicator 408 may display progressively fewer bars and change the color of the displayed bars (e.g., from green, to yellow, to red).

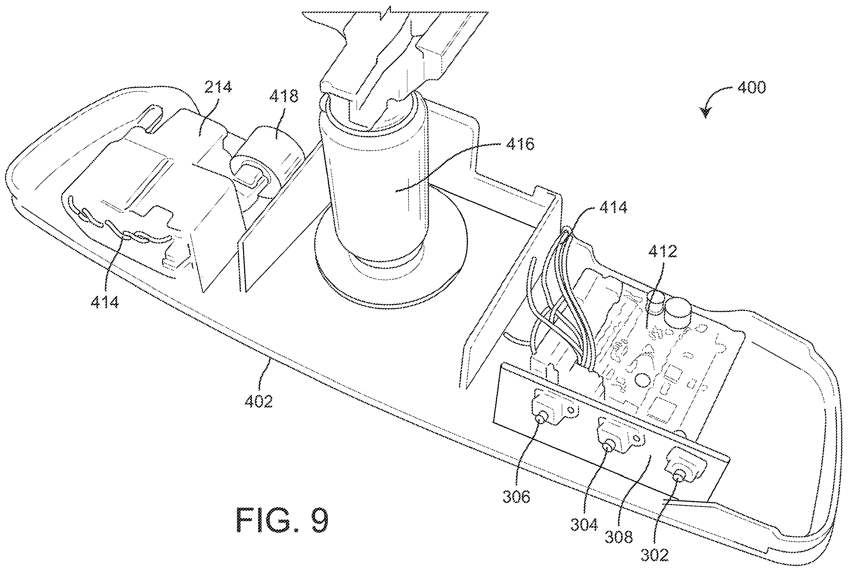

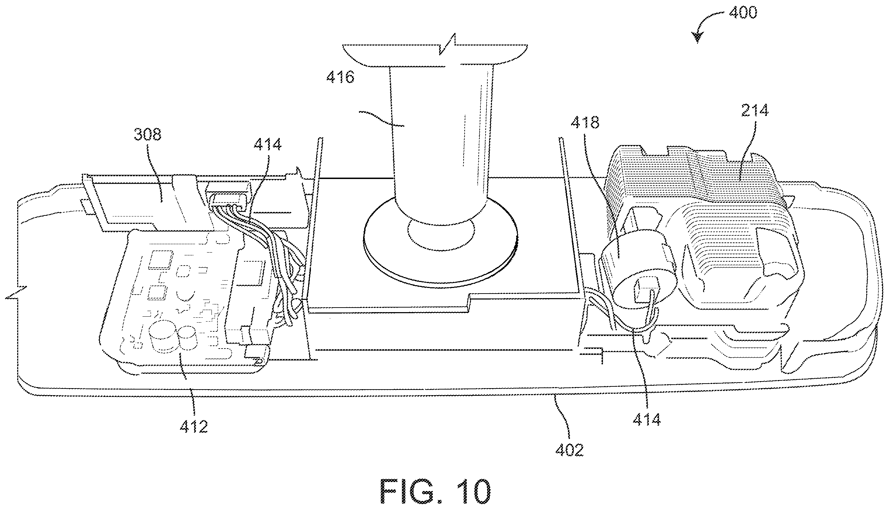

Referring now to FIGS. 9-10, two perspective drawings of mirror assembly 400 are shown, according to an exemplary embodiment. FIG. 9 illustrates a lower rear perspective view of mirror assembly 400 and FIG. 10 illustrates an upper rear perspective view of mirror assembly 400. In both FIGS. 9 and 10, rear view mirror assembly 400 is shown with some or all of housing 316 removed to better illustrate the electronic and physical components contained therein. Rear view mirror assembly 400 is shown to include battery 214, switch interface circuit 308, and a plurality of buttons 302-306 extending from switch interface circuit 308. Battery 214, switch interface circuit 308, and buttons 302-306 may be the same as previously described with reference to FIG. 3.

Rear view mirror assembly 400 is shown to further include a printed circuit board (PCB) 412 and wires 414. PCB 412 may include electronic circuitry configured to perform the functions of control circuit 208, transceiver circuit 218, antenna 220, microcontroller 310, and/or RF circuit 312, as previously described with reference to FIGS. 2-3. Wires 414 are shown connecting switch interface circuit 308 with PCB 412 and with battery 214. Wires 414 are also shown connecting PCB 412 with battery 214. Wires 414 may carry electronic data signals from switch interface circuit 308 to PCB 412 and may be used to deliver power from battery 214 to both PCB 412 and switch interface circuit 308.

In some embodiments, battery 214 may be located near a first end of rear view mirror assembly 400 and PCB 412 may be located near a second of rear view mirror assembly 400, opposite the first end. In some embodiments, rear view mirror assembly 400 includes a stem 416. Stem 416 may be used to mount rear view mirror assembly 400 to a front wind shield of vehicle 100. Wires 414 may extend from battery 214 to PCB 412 and switch interface circuit 308 around or through stem 416.

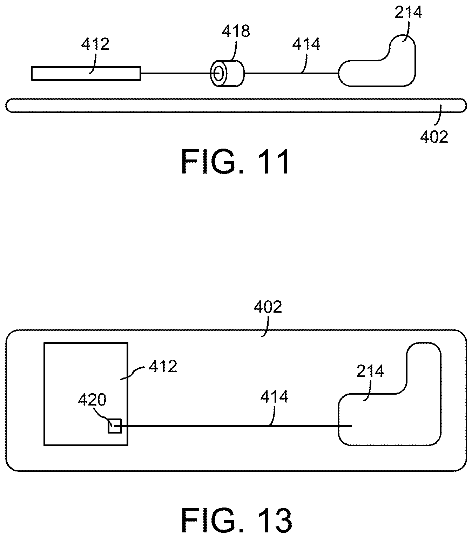

Referring now to FIGS. 11-13, in some embodiments, rear view mirror assembly 400 further includes a damping ring 418. Damping ring 418 may be a ferrite ring or other metallic ring configured to provide magnetic damping for rear view mirror assembly 400. Damping ring 418 may be used to reduce or eliminate magnetic resonance at an undesirable resonance frequency. Magnetic resonance may be caused by the presence of a conductive object proximate to PCB 412. For example, reflective surface 402 may be coated with a metallic material (e.g., silver or another conductive material) for increasing the reflectivity of surface 402. A conductive coating or layer applied to reflective surface 402 may cause magnetic resonance to occur.

Resonance at any particular frequency may improve control signal transmission at one particular frequency (i.e., the resonance frequency) while masking or obscuring control signal transmission at other frequencies. Advantageously, damping ring 418 may provide magnetic damping for trainable transceiver unit 102 over a large range of frequencies to ensure that trainable transceiver unit 102 is capable of reproducing and transmitting many control signals having a variety of different frequencies (e.g., for use with several different remote electronic systems).

In some embodiments, damping ring 418 is tuned to a particular frequency or range of frequencies at which trainable transceiver unit 102 is configured to operate (e.g., frequencies corresponding to various control signals produced by trainable transceiver unit 102) to provide magnetic damping at the tuned frequency or frequency range. In some embodiments, damping ring 418 may be configured to provide magnetic damping within a frequency range from approximately 280 MHz to approximately 440 MHz. In other embodiments, damping ring 418 may be configured to provide magnetic damping at any other frequency or frequency range at which it may be desirable to operate trainable transceiver unit 102 (e.g., based on the frequency requirements of various remote electronic systems). The frequency or frequency range at which damping ring 418 provides magnetic damping may be controlled by the geometry of damping ring 418 (e.g., inner diameter, outer diameter, thickness, cross-sectional area, longitudinal length, etc.) and/or material properties of damping ring 418 (e.g., electrical resistivity, magnetic permeability, density, etc.).

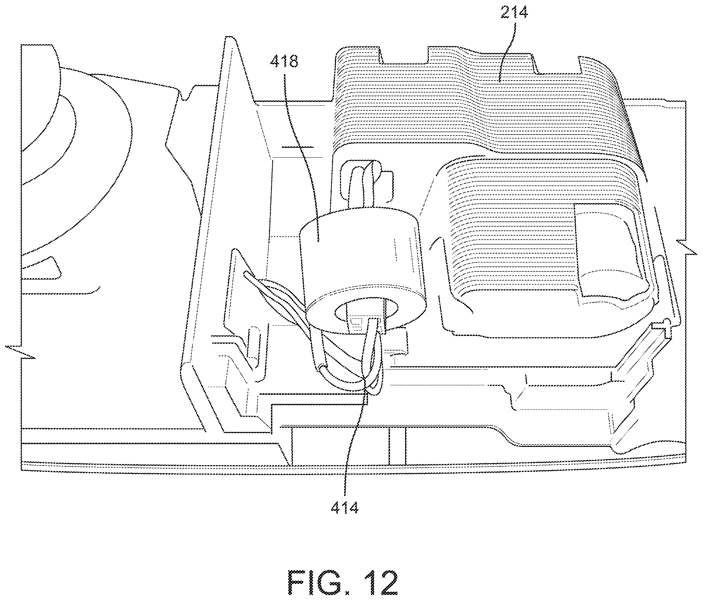

In some embodiments, damping ring 418 may be located around wires 414 (e.g., wires 414 which extend between battery 214 and PCB 412). In other words, wires 414 may pass through damping ring 418. In some embodiments, damping ring 418 may be located at a midpoint of wires 414 between battery 214 and PCB 412 (as shown in FIG. 11) or at an end of wires 414 proximate to the connection of wires 414 and battery 214 (as shown in FIG. 12). In other embodiments, damping ring 418 may be located anywhere along wires 414 (e.g., between battery 214 and PCB 412). In some embodiments, a magnetic damping material 420 may be added to the point of connection between wires 414 and PCB 412 (as shown in FIG. 13). Magnetic damping material 420 may be used in addition to or in place of damping ring 418.

Referring now to FIGS. 14-15, two exemplary antenna configurations are shown, according to an exemplary embodiment. FIG. 14 illustrates a monopole antenna 422 and FIG. 15 illustrates a dipole antenna 424. Antenna 422 or antenna 424 may be connected with transceiver circuit 218 for sending and receiving control signals and other electronic data signals between trainable transceiver unit 102 and remote electronic system 112. Antennas 422 and 424 may be specific embodiments of antenna 220, as described with reference to FIG. 2.

Antennas 422 and 424 are shown to include a first branch 426 and a second branch 428. Referring specifically to FIG. 14, in the monopole configuration, first branch 426 may be fed a control signal 432 (e.g., a RF control signal). Control signal 432 may be produced by transceiver circuit 218 as instructed by control circuit 208. In the monopole configuration, second branch 428 may be electrically grounded (e.g., connected with ground 436) and may not be fed any signal.

Referring specifically to FIG. 15, in the dipole configuration, second branch 428 may be fed a second control signal 434. Control signal 434 may be the same as control signal 432 with the exception that control signal 434 is 180° out of phase with respect to control signal 434. In some embodiments, control signal 434 may be delayed by one half of the period of control signal 432. In other embodiments, branches 426 and 428 may be arranged such that control signals 432 and 434 are separated by half of a control signal wavelength (e.g., the wavelength of either control signal 432 or control signal 434).

In some embodiments, dipole antenna 424 is differential driven (e.g., provided with control signals which are 180° out of phase). Advantageously, such a use of dipole antenna 424 may eliminate the need to electrically ground a portion of dipole antenna 424. For example, as shown in FIG. 15, neither first branch 426 nor second branch 428 are grounded. Additionally, such a use of dipole antenna 424 may prevent magnetic resonance from occurring, thereby reducing or eliminating the need for damping ring 418. Dipole antenna 424 may be used in place of or in addition to damping ring 418 to prevent undesirable magnetic resonance.

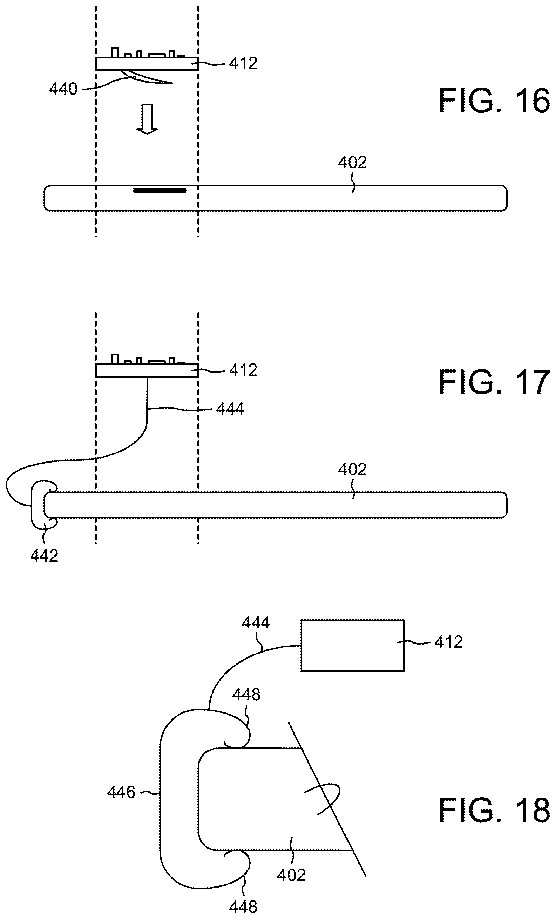

Referring now to FIGS. 16-18, several drawings illustrating an electrical connection between PCB 412 and reflective surface 402 are shown, according to an exemplary embodiment. In some embodiments, it may be desirable to electrically couple PCB 412 with reflective surface 402. For example, for embodiments in which reflective surface 402 is coated with a conductive material, reflective surface 402 may be electrically connected with an integrated antenna portion of PCB 412 (e.g., antenna 220, antenna 422, antenna 424, etc.) to enhance the range of trainable transceiver unit 102. As another example, for embodiments in which reflective surface 402 causes undesirable magnetic resonance, reflective surface 402 may be connected with a grounded portion of PCB 412 to reduce or eliminate the magnetic resonance.

Referring specifically to FIG. 16, in some embodiments, PCB 412 may include a spring finger 440. Spring finger 440 may be a cantilever spring element having a fixed end attached to PCB 412 and a free end extending outward from PCB 412. Spring finger 440 may be located between PCB 412 and reflective surface 402 such that spring finger 440 forms an electrical connection between PCB 412 and reflective surface 402. During installation, spring finger 440 may be compressed between PCB 412 and reflective surface 402. The compressive force applied to spring finger 440 may hold spring finger 440 in place and ensure that electrical contact is maintained. In some embodiments, a zebra clip or other similar device may be used in place of spring finger 440.

In some embodiments, reflective surface 402 may include a non-conductive coating external to the conductive coating. The non-conductive coating may be removed from reflective surface 402 or not applied to reflective surface 402 at the location of contact between spring finger 440 and reflective surface 402 to ensure that an electrical connection is formed. Spring finger 440 may electrically connect reflective surface 402 with either an antenna portion of PCB 412 (e.g., to enhance signal range) or a grounded portion of reflective surface 402 (e.g., to reduce or eliminate magnetic resonance).

Referring specifically to FIG. 17, in some embodiments, a conductive clip 442 is attached to an edge of reflective surface 402. Conductive clip 442 may be a metallic clip used for attaching electrodes to electrochromic mirrors. Conductive clip 442 may be attached (e.g., crimped, soldered, etc.) to a wire 444. Wire 444 may be connected at one end with conductive clip 442 and connected at the other end with PCB 412. In some embodiments, wire 444 connects to an antenna portion of PCB 412 to electrically couple the antenna with conductive surface 402 (e.g., for enhancing signal range). In other embodiments, wire 444 connects to a grounded portion of PCB 412 to electrically couple the grounded portion of PCB 412 with reflective surface 402 (e.g., for reducing or eliminating magnetic resonance).

Referring specifically to FIG. 18, a cross-section of the connection between conductive clip 442 and reflective surface 402 is shown in greater detail, according to an exemplary embodiment. Conductive clip 442 is shown to include a substantially linear middle section 446 extending between two curved ends 448. The geometry of conductive clip 442 (e.g., the curvature of ends 448, the length of middle section 446, etc.) and/or the material from which conductive clip 442 is constructed (e.g., material density, material stiffness, etc.) may be selected such that conductive clip 442 is held in an engaged position with respect to reflective surface 402 (e.g., "clipped" onto reflective surface 402). For example, conductive clip 442 may be flexed when inserted over an end of reflective surface 402 (e.g., stretched, bent, expanded, etc.). The flexure of conductive clip 442 may cause ends 448 to apply a compressive force to reflective surface 402, thereby holding conductive clip 442 in an engaged position.

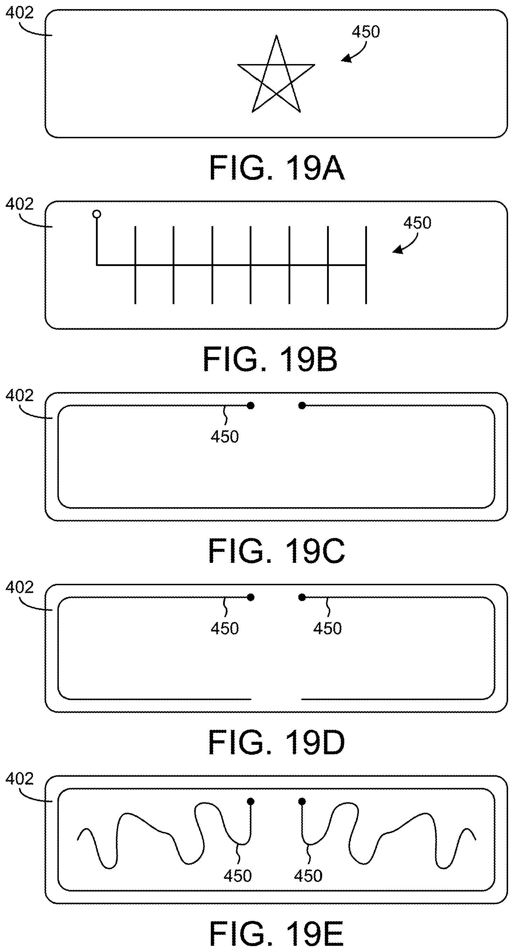

Referring now to FIG. 19, several drawings of an integrated antenna and mirror are shown, according to an exemplary embodiment. In some embodiments, an antenna 450 may be integrated with reflective surface 402. For example, the metallic reflective layer of surface 402 may be screen printed, masked, or otherwise applied such that a portion of the metallic layer is electrically isolated from the remainder of the metallic later. The electrically-isolated portion 450 may be used as an antenna, as an integrated ground plane, or any for any other purpose for which it may be advantageous to electrically isolate a portion of reflective surface 402. For example, an antenna integrated with rear view mirror assembly 400 can be used as a radio antenna for a vehicle radio, a GPS antenna for a vehicle navigation system, a cell phone antenna for placing hands-free calls from within the vehicle, and/or a RFID antenna for a keyless entry system, an automated toll-pay system, a garage door system, or any other system having a RFID reader. The location of antenna 450 within rear view mirror assembly 400 (e.g., an elevated position within the vehicle, visible from the front, top, and sides of the vehicle, etc.) may provide improved visibility and functionality over traditional antenna locations.

Antenna 450 may be applied to reflective surface 402 in any of a wide variety of patterns, arrangements, or shapes. For example, antenna 450 may be applied in a fractal pattern (shown in FIG. 19A), a yagi/log periodic pattern (shown in FIG. 19B), a loop pattern (shown in FIG. 19C), a dipole pattern (shown in FIG. 19D), a RFID pattern (shown in FIG. 19E), or any other pattern as may be suitable for various antenna applications (e.g., radio, GPS, RFID, etc.). In some embodiments, antenna 450 may be used as an energy harvesting antenna for collecting energy from various electromagnetic signals (e.g., radio waves, cell phone signals, WiFi signals, RFID signals, etc.).

In some embodiments, mirror assembly 400 may include a RFID tag. The RFID tag may be a passive or active RFID component mounted within or upon mirror assembly 400. In some embodiments, the RFID tag may be embedded in the optically-transmissive material of reflective surface 402 (e.g., within a glass pane, between two transparent panes, etc.), screen-printed onto reflective surface 402 (e.g., such that the RFID tag portion is electrically isolated from the remainder of reflective surface 402), or otherwise integrated with reflective surface 402. In other embodiments, the RFID tag may be otherwise integrated with mirror assembly 400 (e.g., mounted upon or installed within a housing for mirror assembly 400, etc.). In some embodiments, the RFID tag draws power from battery 214. In other embodiments, the RFID tag does not require a local power source (e.g., for embodiments in which the RFID tag is a passive RFID element).

Advantageously, integrating a RFID tag with mirror assembly 400 may provide improved visibility and functionality over traditional RFID tag locations. For example, a RFID tag integrated with a rear view mirror assembly may allow the RFID tag to be visible from many different angles and perspectives relative to vehicle 100 (e.g., in front of vehicle 100, above vehicle 100, beside vehicle 100, within vehicle 100, etc.). The improved visibility provided integrating a RFID tag with mirror assembly 400 may be advantageous for various vehicle-related RFID applications (e.g., keyless entry, automatic gate or garage door access, automated toll pay, etc.).

Referring now to FIGS. 20-21, circuit diagrams of several energy harvesting devices are shown, according to an exemplary embodiment. Energy harvesting devices may be used to trickle charge battery 214, thereby extending battery life and reducing or eliminating the need for battery replacement. Energy harvesting devices may include a mechanical energy-capture device 462 for collecting mechanical energy (shown in FIG. 20), a solar cell 464 for collecting solar energy (shown in FIG. 21), a thermal absorption device for collecting heat energy, a radio frequency energy capture device for collecting energy from radio frequency signals (e.g., AM radio, WiFi, cell phone, etc.), or any other type of energy absorption or energy capture device.

Referring specifically to FIG. 20, in some embodiments, mechanical energy capture device 462 is a piezoelectric device. In some embodiments, energy capture device 462 includes a user-operable dial or spring plunger attached to rear view mirror assembly 400. The dial or spring plunger may be attached to a magnetic element (e.g., a rotating magnet, a magnet moveable within a solenoid, etc.) for generating electric current. A user may manually operate mechanical energy capture device 462 by turning the dial or pushing the spring plunger, thereby moving the magnetic element and causing electric current to be provided to battery 214.

In some embodiments, mechanical energy capture device 462 includes a piezoelectric element configured to induce a voltage when vibrated. For example, one end of the piezoelectric element may be attached to a stem of the rear view mirror assembly (e.g., stem 416 extending from the mirror housing to the front wind shield of vehicle 100). The other end of the piezoelectric element may be attached to an internal structure of the rear view mirror assembly. As rear view mirror assembly 400 vibrates relative to the stem, the piezoelectric element may induce a voltage for recharging battery 214.

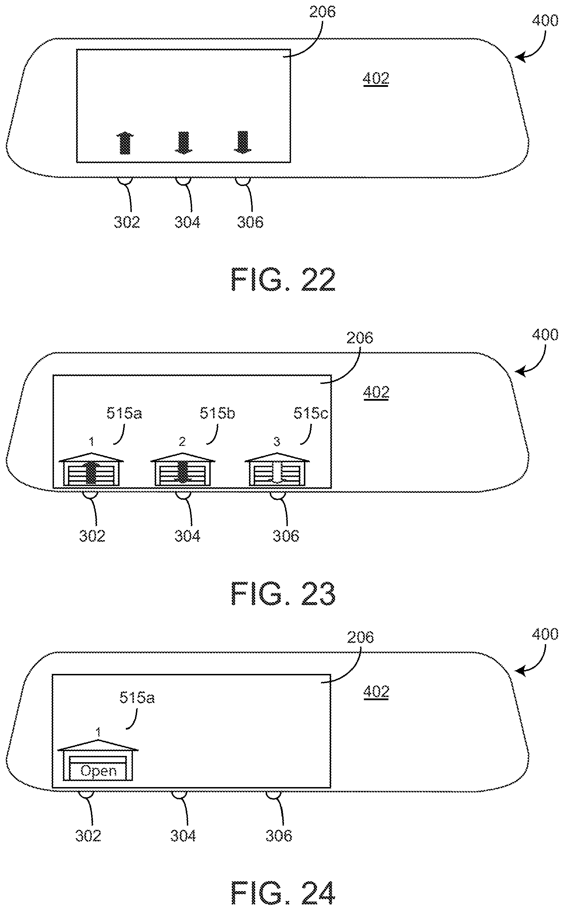

Referring now to FIGS. 22-27, several drawings illustrating the two-way communication and display functionality of trainable transceiver unit 102 are shown, according to an exemplary embodiment. Trainable transceiver unit 102 may be configured to receive status information from remote electronic system 112 and present such status information via display 206.

Referring specifically to FIG. 22, mirror assembly 400 is shown, according to one exemplary embodiment. Mirror assembly 400 is shown to include reflective surface 402 and inputs 302, 304, 306. Reflective surface 402 may be partially transmissive, partially reflective, transflective, etc. such that objects behind reflective surface 402 may be viewed, while at least partially maintaining the reflectivity of the surface to act as a mirror. Moreover, reflective surface 402 may be electrochromatic or any other type of reflective element. Display 206 may be integrated within or behind reflective surface 402 may be used to display icons, text, or other images on or through reflective surface 402. In an exemplary embodiment, display 206 may be a back-up display that may be caused to display a video scene from a back-up camera.

In the embodiment of FIG. 22, arrows are overlaid on the video scene to indicate a status of the remote devices controlled by trainable transceiver unit 102. For example, the left-most arrow is illustrated to point up and therefore indicates that the garage door associated with button 302 is in an "OPEN" state. The middle and right arrows above buttons 304, 306 are illustrated to point down and therefore indicate that the garage doors associated with buttons 304, 306 are in a "CLOSED" state.

Referring now to FIG. 23, mirror assembly 400 is shown, according to another exemplary embodiment. Mirror assembly 400 includes reflective surface 402 with display 206. Display 206 may primarily be used as a back-up display for showing a video capture from a back-up camera. Mirror assembly 400 further includes inputs 302, 304, 306. Display 206 is illustrated as graphically displaying remote device status symbols 515a, 515b, 515c. In the example of FIG. 23, graphical display symbols 515a, 515b, 515c are shown as garage doors with arrows (e.g., arrows overlaid on the garage door graphics). According to other exemplary embodiments, symbols 515a, 515b, 515c may be of varying graphical shapes or designs for representing the remote electronic system associated with the symbol (e.g., garage door system, security system, lighting systems, etc.). For example, if the remote electronic system associated with the symbol is a lighting system, then "on" or "off' lightbulb graphics may be displayed on display 206.

In some embodiments, graphical display symbols 515a, 515b, 515c may be presented via display 206 in response to a user or automatic selection of a corresponding input 302, 304, 306, start of an ignition in the vehicle, opening of a vehicle door, upon voice demand (e.g., "show me garage door status"), etc. If a first garage door is open, a symbol 515a corresponding with the garage door may be shown to alert the driver that the garage door is open. As another example, upon user selection of an input (e.g., input 302), symbol 515a may be shown to indicate selection of the input, and may further change a display state depending on the status of the garage door system.

The user may select and determine which of the aforementioned systems cause presentation of the symbols, as well as the duration of symbol presentation. For example, when a state changes for a particular system (e.g., garage door system, security system, lighting system), graphical display symbols 515a, 515b, 515c may automatically be enabled to change states if the user presets the trainable transceiver system (e.g., via inputs to rearview mirror 400) to provide the information within display 206. Graphical display symbols 515a, 515b, 515c may indicate that a device operated by inputs 302, 304, 306 is being controlled. Moreover, the brightness and color of the graphical display symbols may not be limited to a single level. Rather, brightness and color may be tied to various factors, such as amount of ambient light, user selection, headlamp status, user movement, or any other factor. For example, for a graphical display symbol representing garage door status, the graphical display symbol may be a different color or shown with a different intensity based on whether the garage door is open, closed, or transitioning between an open state and a closed state.

In the embodiment of FIG. 23, arrows for symbols 515a, 515b are shown shaded in, indicating an inactive state of the garage door, while symbol 515c has an arrow not shaded in, indicating the garage door is currently closing. Sensed ambient light may also determine the intensity of the graphical display symbol. The graphical display symbols may shown on display 206 in any form, shape, or pattern, including characters, symbols, numbers, etc., and are not limited to the specific embodiments illustrated in the figures.

Referring now to FIG. 24, in some embodiments, graphical display symbols 515a, 515b, 515c may be animated (e.g., the symbols may change appearance on the display 206). For example, graphical display symbol 515a may be a graphical animation of a garage door opening, with the final frame of the graphical animation being an open garage door having "open" text (as shown in FIG. 24). The word "opening" may be displayed on graphical display symbol 515a during the animation and while the garage door is opening.

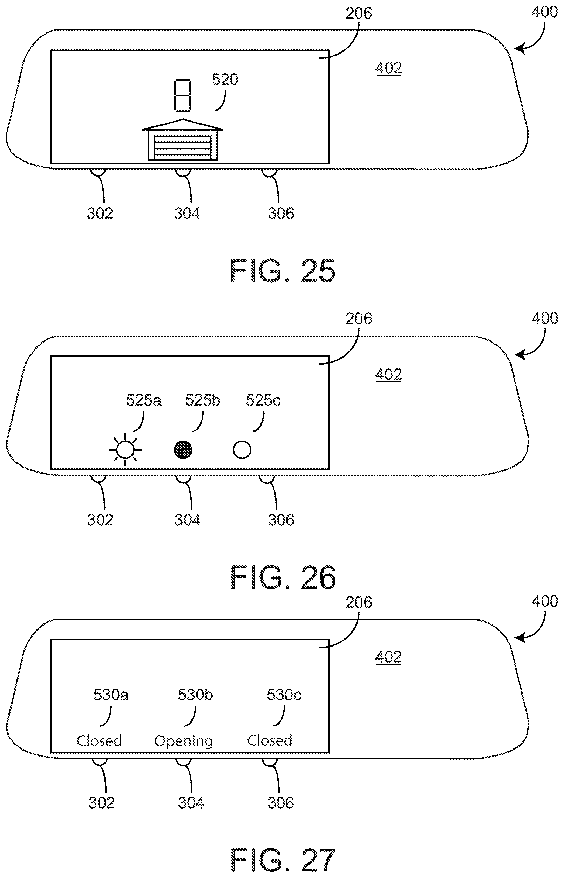

Referring now to FIG. 25, mirror assembly 400 is shown, according to yet another exemplary embodiment. In some embodiments, instead of providing multiple symbols 515a, 515b, 515c corresponding to inputs 302, 304, 306, mirror assembly 400 may use a single graphical display symbol 520 for any one of or all inputs 302, 304, 306. For example, if input 302 is selected, graphical display symbol 520 may be activated within display 206 such that it becomes visible to the user. Additionally, graphical display symbol 520 may display a number (depicted in the illustrated embodiment) that corresponds to input 302. For example, symbol 520 may be activated and may be configured to show the number "1," when first input 302 is selected.

Additionally, since each of inputs 302, 304, 306 may correspond to a specific remote electronic device (e.g., a garage door, lights, etc.), the symbol shown may change. For example, a garage door icon is shown in FIG. 25, but upon selection of the appropriate input, a different icon may then appear in the place of the garage door icon. Similar to the embodiment in FIG. 23, graphical display symbol 520 may be substantially or completely hidden (i.e., not visible) to a person viewing mirror assembly 400 when the mirror assembly is mounted in the vehicle, and when graphical display symbol 520 is not activated. This enables mirror assembly 400 to be fully utilized as a rearview mirror without distraction on part of a user.

As described above, graphical display symbol 520 may be a reconfigurable display. For example, graphical display symbol 520 may include a seven-segment indicator (represented by the block "8" in FIG. 25) that is capable of indicating which of the corresponding inputs 302, 304, 306 (which inputs correspond to a device, as described above) has been selected. The seven-segment indicator and garage door icon shown in FIG. 25 may be activated/deactivated together or separately to create different visual responses. Additionally, the color (or multiple colors), brightness, activity, etc. of the seven-segment indicator and garage door icon of graphical display symbol 520 may be the same or provided differently for visual response or otherwise. Other text, characters, symbols, etc. may also be displayed as part of graphical display symbol 520. Graphical display symbol 520 may also be configured to display for a predetermined or user selectable amount/length of time.

Referring now to FIG. 26, mirror assembly 400 is shown, according to yet another exemplary embodiment. Display 206 of FIG. 26 includes graphical display symbols 525a, 525b, 525c (e.g., indicators). Graphical display symbols 525a, 525b, 525c may be used to indicate a status based on the color and brightness of the symbols, blinking of the symbols, or other display properties. The driver of the vehicle may understand the meaning of the various display properties of the symbols. For example, the driver may recognize that blinking of an graphical display symbol 525a may indicate that a garage door is changing states by either opening or closing. Further, if an graphical display symbol 525b is darkened or "filled in," the driver may recognize that the corresponding garage door is closed, and if an graphical display symbol 525c is light or "empty," the driver may recognize that the corresponding garage door is open.

Although graphical display symbols 525a, 525b, 525c, as illustrated in the embodiment, are displayed (when activated) as a single light, the graphical display symbols may appear in any desired shape or pattern, and in any color or combination of colors. Additionally, the graphical display symbols may have a brightness that varies with ambient light or is set to a desired level.

Display 206 may also be touch sensitive. For example, a user may be able to operate a remote system when the user touches an area where a graphical display symbol is currently visible. Display 206 may use non-contact technology (e.g., optical, capacitive, resistive) to determine user proximity to display 206 and activation of inputs 302, 304, 306. The symbols may be visible all the time or only for a variable period of time. The symbol may be made visible for a variable period of time based on another input from the vehicle, such as opening the door, turning on interior lights, starting the car, etc. The method of activation and length of time may be programmable by a user, such as from a vehicle message center.

Referring now to FIG. 27, rearview mirror assembly 400 is shown, according to yet another exemplary embodiment. In the embodiment of FIG. 27, display 206 includes text 530a, 530b, 530c which provides a textual representation of system statuses. For example, in the embodiment of FIG. 27, text may be visible that indicates a garage door status (e.g., open, closed, opening, closing). Text 530a indicates that a first garage door is closed, text 530b indicates that a second garage door is currently opening, and so forth. In some embodiments, text 530a, 530b, 530c may be made visible when there is a current change in garage door status (e.g., the garage door opening or closing) and then fade or disappear when the change is complete.

Referring generally to FIGS. 22-27, an audio system may be integrated into rearview mirror assembly 400. The audio system may include a speaker or other audio output device configured to relay status information. For example, upon pressing an input 302, for example, an audio output (e.g., an audible sound) which relays the status of a corresponding garage door may be provided to the driver. The speaker or other audio output device may be used in addition to display 206.

It should be noted that references to "front," "back," "rear," "upward," "downward," "inner," "outer," "right," and "left" in this description are merely used to identify the various elements as they are oriented in the FIGURES. These terms are not meant to limit the element which they describe, as the various elements may be oriented differently in various applications.

It should further be noted that for purposes of this disclosure, the term "coupled" means the joining of two members directly or indirectly to one another. Such joining may be stationary in nature or moveable in nature and/or such joining may allow for the flow of fluids, electricity, electrical signals, or other types of signals or communication between the two members. Such joining may be achieved with the two members or the two members and any additional intermediate members being integrally formed as a single unitary body with one another or with the two members or the two members and any additional intermediate members being attached to one another. Such joining may be permanent in nature or alternatively may be removable or releasable in nature.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A mirror assembly for use/mounting in a vehicle (100), the mirror assembly comprising:
a trainable transceiver unit (102) comprising:
a transceiver circuit (218) configured to reproduce and transmit control signals for operating a plurality of remote electronic devices;
a user interface element (202);
a battery (214) configured to power the transceiver circuit (218) and the user interface element (202);
an electronic display (206) configured to present visual information to a vehicle occupant;
a control circuit (208) configured to monitor an amount of energy remaining in the battery (214) and cause the electronic display (206) to progressively present a battery life indicator showing an indication of the amount of energy remaining in the battery (214) in response to at least one of: the amount of energy remaining in the battery (214) dropping below a threshold energy value, and a voltage produced by the battery (214) dropping below a threshold voltage, wherein the mirror assembly of the vehicle (100) includes the electronic display (206); and
a housing (316) containing the transceiver circuit (218), the user interface element (202), the electronic display (206), the control circuit (208), and the battery (214), wherein the housing (316) is integrated with the mirror assembly of the vehicle (100).

2. The mirror assembly of Claim 1, wherein the battery (214) is configured to power only the trainable transceiver unit (102).

3. The mirror assembly of Claim 1, wherein the battery (214) is a long-life battery configured for performance at a range of temperatures at which the vehicle (100) operates.

4. The mirror assembly of Claim 1, wherein the battery (214) is a lithium battery contained within a mirror assembly (400) of the vehicle.

5. The mirror assembly of Claim 1, wherein the battery (214) includes a hybrid layer capacitor and a lithium cell.

6. The mirror assembly of Claim 1, wherein the trainable transceiver unit further comprises an antenna (220) coupled to the transceiver circuit (218);
wherein the antenna (220) is a dipole antenna configured to transmit a differential control signal to a remote electronic device.

7. The mirror assembly of Claim 1, wherein the trainable transceiver unit further comprises an energy harvesting device; wherein the energy harvesting device is configured to charge at least one of: the battery (214) and a capacitor.

8. The mirror assembly of Claim 7, wherein the energy harvesting device is at least one of: a mechanical energy capture device, a piezoelectric energy capture device, a solar energy capture device, and an electromagnetic energy capture device.

9. The mirror assembly of Claim 1, wherein the trainable transceiver unit further comprises a user input device (204);
wherein the transceiver circuit (218) is configured to transmit a control signal in response to an input received via the user input device (204).

10. The mirror assembly of Claim 1, wherein the mirror assembly (400) is a rear view mirror assembly for the vehicle (100).

11. The mirror assembly of Claim 1, wherein the mirror assembly (400) is configured to operate as a standalone unit without requiring any wired connections external to the housing (316).

12. The mirror assembly of Claim 1, wherein the trainable transceiver unit further comprises:
a partially-transmissive reflective surface covering an opening in the housing (316); and
wherein the electronic display (206) is contained within the mirror assembly (400) between the reflective surface and the housing (316), wherein the electronic display (206) is configured to the present visual information through the partially-transmissive reflective surface.

13. The mirror assembly of Claim 1, wherein the trainable transceiver unit further comprises a user input device (204); wherein the electronic display (206) is configured to present the indication of the amount of energy remaining in the battery (214) in response to an input received via the user input device (204).

## Patentansprüche

1. Eine Spiegelanordnung zur Verwendung/Montage in einem Fahrzeug (100), wobei die Spiegelanordnung Folgendes umfasst:
eine trainierbare Sende-Empfänger-Einheit (102), die Folgendes umfasst:
eine Sende-Empfänger-Schaltung (218), die konfiguriert ist, um Steuersignale, zum Betreiben einer Vielzahl von entfernten elektronischen Vorrichtungen, wiederzugeben und zu übertragen;
ein Benutzerschnittstellenelement (202);
eine Batterie (214), die konfiguriert ist, um die Sende-Empfänger-Schaltung (218) und das Benutzerschnittstellenelement (202) mit Strom zu versorgen;
eine elektronische Anzeige (206), die konfiguriert ist, um visuelle Informationen an einen Fahrzeuginsassen zu übermitteln;
eine Steuerschaltung (208), die konfiguriert ist, um eine in der Batterie (214) verbleibende Energiemenge zu überwachen und die elektronische Anzeige (206) zu veranlassen, schrittweise (*progressively*) eine Angabe der Batterielebensdauer darzustellen, die einen Hinweis auf die in der Batterie (214) verbleibenden Energiemenge angibt, als Reaktion auf mindestens eines der Folgenden: die in der Batterie (214) verbleibende Energiemenge fällt unter einen Schwellenenergiewert, eine von der Batterie (214) erzeugte Spannung fällt unter eine Schwellenspannung, wobei die Spiegelanordnung des Fahrzeugs (100) die elektronische Anzeige (206) beinhaltet; und
ein Gehäuse (316), das die Sender-Empfänger-Schaltung (218), das Benutzerschnittstellenelement (202), die elektronische Anzeige (206), die Steuerschaltung (208) und die Batterie (214) enthält, wobei das Gehäuse (316) in die Spiegelanordnung des Fahrzeugs (100) eingebunden ist.

2. Die Spiegelanordnung nach Anspruch 1, wobei die Batterie (214) konfiguriert ist, um nur die trainierbare Sende-Empfänger-Einheit (102) zu betreiben.

3. Die Spiegelanordnung nach Anspruch 1, wobei die Batterie (214) eine langlebige Batterie ist, die zur Funktion in einem Temperaturbereich konfiguriert ist, in dem das Fahrzeug (100) arbeitet.

4. Die Spiegelanordnung nach Anspruch 1, wobei die Batterie (214) eine Lithiumbatterie ist, die in einer Spiegelanordnung (400) des Fahrzeugs enthalten ist.

5. Die Spiegelanordnung nach Anspruch 1, wobei die Batterie (214) einen Hybridschichtkondensator und eine Lithiumzelle beinhaltet.

6. Die Spiegelanordnung nach Anspruch 1, wobei die trainierbare Sende-Empfänger-Einheit ferner eine Antenne (220) umfasst, die mit der Sende-Empfänger-Schaltung (218) gekoppelt ist;
wobei die Antenne (220) eine Dipolantenne ist, die konfiguriert ist, um ein differentielles Steuersignal an eine entfernte elektronische Vorrichtung zu senden.

7. Die Spiegelanordnung nach Anspruch 1, wobei die trainierbare Sende-Empfangs-Einheit ferner eine Vorrichtung zur Energiegewinnung (*energy harvesting*) umfasst; wobei die Energiegewinnungsvorrichtung konfiguriert ist, um mindestens eines der Folgenden zu laden: die Batterie (214) und einen Kondensator.

8. Die Spiegelanordnung nach Anspruch 7, wobei die Energiegewinnungsvorrichtung mindestens eine der Folgenden ist: eine mechanische Energieerfassungsvorrichtung, eine piezoelektrische Energieerfassungsvorrichtung, eine solare Energieerfassungsvorrichtung und eine elektromagnetische Energieerfassungsvorrichtung.

9. Die Spiegelanordnung nach Anspruch 1, wobei die trainierbare Sende-Empfangs-Einheit ferner eine Benutzereingabevorrichtung (204) umfasst;
wobei die Sende-Empfänger-Schaltung (218) konfiguriert ist, um ein Steuersignal zu senden, als Reaktion auf eine über die Benutzereingabevorrichtung (204) empfangene Eingabe.

10. Die Spiegelanordnung nach Anspruch 1, wobei die Spiegelanordnung (400) eine Rückspiegelanordnung für das Fahrzeug (100) ist.

11. Die Spiegelanordnung nach Anspruch 1, wobei die Spiegelanordnung (400) konfiguriert ist, um als eigenständige Einheit zu arbeiten, ohne dass drahtgebundene Verbindungen außerhalb des Gehäuses (316) erforderlich sind.

12. Die Spiegelanordnung nach Anspruch 1, wobei die trainierbare Sende-Empfangs-Einheit ferner Folgendes umfasst:
eine teildurchlässige reflektierende Oberfläche, die eine Öffnung im Gehäuse (316) bedeckt; und
wobei die elektronische Anzeige (206) in der Spiegelanordnung (400), zwischen der reflektierenden Oberfläche und dem Gehäuse (316) enthalten ist, wobei die elektronische Anzeige (206) konfiguriert ist, um visuelle Information durch die teildurchlässige reflektierende Oberfläche zu präsentieren.

13. Die Spiegelanordnung nach Anspruch 1, wobei die trainierbare Sende-Empfangs-Einheit ferner eine Benutzereingabevorrichtung (204) umfasst; wobei die elektronische Anzeige (206) konfiguriert ist, um die Angabe der in der Batterie (214) verbleibenden Energiemenge zu präsentieren, als Reaktion auf eine über die Benutzereingabevorrichtung (204) empfangene Eingabe.

## Revendications

1. Un ensemble miroir pour utilisation / montage dans un véhicule (100), l'ensemble miroir comprenant :
une unité émettrice-réceptrice (102) à capacité d'apprentissage, comprenant :
un circuit émetteur-récepteur (218) configuré pour reproduire et transmettre des signaux de commande pour faire fonctionner une pluralité de dispositifs électroniques distants ;
un élément interface utilisateur (202) ;
une batterie (214) configurée pour alimenter le circuit émetteur-récepteur (218) et l'élément interface utilisateur (202) ;
un afficheur électronique (206) configuré pour présenter des informations visuelles à un occupant de véhicule ;
un circuit de commande (208) configuré pour surveiller une quantité d'énergie restante dans la batterie (214) et amener l'afficheur électronique (206) à présenter progressivement un indicateur de durée de vie de batterie donnant une indication de la quantité d'énergie restante dans la batterie (214) en réponse à au moins l'un parmi : la quantité d'énergie restant dans la batterie (214) tombant sous une valeur énergétique seuil et une tension produite par la batterie (214) tombant sous une tension seuil, sachant que l'ensemble miroir du véhicule (100) inclut l'afficheur électronique (206) ; et
un boîtier (316) contenant le circuit émetteur-récepteur (218), l'élément interface utilisateur (202), l'afficheur électronique (206), le circuit de commande (208) et la batterie (214), sachant que le boîtier (316) est intégré à l'ensemble miroir du véhicule (100).

2. L'ensemble miroir d'après la revendication 1, sachant que la batterie (214) est configurée pour n'alimenter que l'unité émettrice-réceptrice (102) à capacité d'apprentissage.

3. L'ensemble miroir d'après la revendication 1, sachant que la batterie (214) est une batterie à longue durée de vie configurée pour fonctionner dans une plage de températures dans laquelle le véhicule (100) fonctionne.

4. L'ensemble miroir d'après la revendication 1, sachant que la batterie (214) est une batterie au lithium contenue dans un ensemble miroir (400) du véhicule.

5. L'ensemble miroir d'après la revendication 1, sachant que la batterie (214) comprend un condensateur à couche hybride et une batterie au lithium.

6. L'ensemble miroir d'après la revendication 1, sachant que l'unité émettrice-réceptrice à capacité d'apprentissage comprend en outre une antenne (220) couplée au circuit émetteur-réceptrice (218) ;
sachant que l'antenne (220) est une antenne dipôle configurée pour transmettre un signal de commande différentiel à un dispositif électronique distant.

7. L'ensemble miroir d'après la revendication 1, sachant que l'unité émettrice-réceptrice à capacité d'apprentissage comprend en outre un dispositif de récupération d'énergie ; sachant que le dispositif de récupération d'énergie est configuré pour charger au moins l'un parmi : la batterie (214) et un condensateur.

8. L'ensemble miroir d'après la revendication 7, sachant que le dispositif de récupération d'énergie est au moins l'un parmi : un dispositif de collecte d'énergie mécanique, un dispositif de collecte d'énergie piézoélectrique, un dispositif de collecte d'énergie solaire, et un dispositif de collecte d'énergie électromagnétique.

9. L'ensemble miroir d'après la revendication 1, sachant que l'unité émettrice-réceptrice à capacité d'apprentissage comprend en outre un dispositif d'entrée utilisateur (204) ;
sachant que le circuit émetteur-récepteur (218) est configuré pour transmettre un signal de commande en réponse à une entrée reçue via le dispositif d'entrée utilisateur (204).

10. L'ensemble miroir d'après la revendication 1, sachant que l'ensemble miroir (400) est un ensemble miroir rétroviseur pour le véhicule (100).

11. L'ensemble miroir d'après la revendication 1, sachant que l'ensemble miroir (400) est configuré pour fonctionner en tant qu'unité autonome sans nécessiter de connexions câblées à l'extérieur du boîtier (316).

12. L'ensemble miroir d'après la revendication 1, sachant que l'unité émettrice-réceptrice à capacité d'apprentissage comprend en outre :
une surface réfléchissante partiellement transmissive recouvrant une ouverture dans le boîtier (316) ; et
sachant que l'afficheur électronique (206) est contenu à l'intérieur de l'ensemble miroir (400) entre la surface réfléchissante et le boîtier (316), sachant que l'afficheur électronique (206) est configuré pour présenter des informations visuelles à travers la surface réfléchissante partiellement transmissive.

13. L'ensemble miroir d'après la revendication 1, sachant que l'unité émettrice-réceptrice à capacité d'apprentissage comprend en outre un dispositif d'entrée utilisateur (204) ; sachant que l'afficheur électronique (206) est configuré pour présenter l'indication de la quantité d'énergie restant dans la batterie (214) en réponse à une entrée reçue via le dispositif d'entrée utilisateur (204).
